Europäisches Patentamt

(19) European Patent Office

Office européen des brevets

(11) Publication number: **0 012 038**
A1

## (12) EUROPEAN PATENT APPLICATION

(21) Application number: 79302774.9

(22) Date of filing: 04.12.79

(51) Int. Cl.³: **F 17 C 3/08**
F 16 L 59/06, F 16 L 59/08

(30) Priority: 04.12.78 US 965759

(43) Date of publication of application:
11.06.80 Bulletin 80/12

(84) Designated Contracting States:
BE DE FR GB NL

(71) Applicant: AIR PRODUCTS AND CHEMICALS, INC.
P.O. Box 538
Allentown, Pennsylvania 18105(US)

(72) Inventor: Timberlake, George Albert
95 Hillcrest Drive AO
Macungie, Pennsylvania, 18062(US)

(72) Inventor: Arencibia, Jose Patricio
433 Montclair Avenue
Bethlehem, Pennsylvania, 18105(US)

(74) Representative: Lucas, Brian Ronald
c/o Air Products Limited Coombe House St. George's
Square
New Malden Surrey, KT3 4HH(GB)

(54) Superinsulation and superinsulation system.

(57) Superinsulation for use in cryogenic tanks comprises hollow insulating spheres of polymeric material which (a) are between $0,32.10^{-2}$ and $3,81.10^{-2}$m in overall diameter; (b) have at least one evacuation hole (22), and (c) are provided with reflective material to form a radiation shield. The reflective material may be in the form of a coating (18) or formed by incorporating reflective material (30) in the structure of the hollow insulating spheres. The outside of the hollow insulating spheres may be coated with a low friction material to facilitate packing.

In a superinsulation system comprising first and second walls the overall diameter of the hollow insulating spheres is preferably chosen to be between 1/12 and 1/24 of the distance between the walls.

EP 0 012 038 A1

./...

Croydon Printing Company Ltd.

FIG.2.

FIG.3.

This invention relates to superinsulation and to a superinsulation system.

Conventional tanks for the storage and transportation of cryogenic liquid commonly utilize perlite, or similar types of particulate insulation material, in the evacuated space between the inner cryogenic vessel and the surrounding jacket. When newly installed, the particulate insulation for a commercially sized vessel may have a low heat leak in the order of 1,500 BTUs per hour. However, after compaction of the particulate insulation over a period of time, the heat leak may rise to as high as 20,000 BTUs per hour. Other forms of insulation having superior insulating properties are generally referred to as superinsulation. These typically comprise layers of aluminium foil separated by a low conductivity material such as fibreglass, or aluminized layers of crinkled Mylar. Newly installed superinsulation may have a heat leak as low as 250 BTUs/hr for a commercial size vessel, but as compaction occurs, this value may rise as high as 700 BTUs/hr. In addition, this form of insulation is quite difficult to install and repair since the many layers must be wrapped around the inner vessel before it is installed within the outer jacket. Because of the higher cost, the use of such superinsulation has been generally limited to vessels for transporting and/or storing ultra low boiling point cryogens such as liquid hydrogen and helium.

The present invention, at least in its preferred embodiments, combines the pourability of the particulate-type insulation which the substantially higher insulation values of conventional forms of superinsulation. In addition the present invention, at least in its preferred embodiments, results in a superinsulation which is substantially lighter in weight than the particulate-type insulation and is significantly lower in installed cost than the previous superinsulation systems.

According to the present invention there is provided superinsulation comprising a plurality of hollow insulating spheres composed of polymeric material, characterized in that each of said hollow insulating spheres (a) has an overall diameter from 0.125 to 1.5 inches, (b) has at least one evacuation hole, and (c) is provided with reflective material to form a radiation shield.

The reflective material may comprise reflective particles, for example coated microspheres, uncoated glass microspheres, metal chips, silica flakes and mixtures thereof. In the case of microspheres, the hollow insulating spheres are preferably composed of a composite material comprising a polymeric resin and a plurality of microspheres in which the ratio of the volume of the microspheres to the volume of polymeric resin is greater than 1:1.

As an alternative to, or in addition to, reflective particles, the hollow insulating spheres may be coated internally or externally with a layer of reflective material which is preferably from 25 to 150 $\overset{\text{o}}{\text{A}}$ thick. The coating may be applied direct to the surface of the hollow insulating sphere or over a sealing layer as described hereinafter.

In order to facilitate packing (and thereby reducing settlement after initial packing), the hollow insulating spheres are preferably provided with a coating of a low friction material.

Preferably the thickness of the wall of said hollow insulating spheres is from 0.005 to 0.09 inches and the overall diameter of said hollow insulating spheres is from 0.125 to 1.5 inches.

The present invention also provides a superinsulation system comprising an evacuated insulation space formed between a first wall and a second wall spaced from said first wall, characterized in that the evacuated insulation space contains superinsulation in accordance with the present invention. In such an arrangement the overall diameter of the hollow insulating spheres is preferably from 1/12 to 1/24 of the distance between the first and second walls.

For a better understanding of the present invention and to show how the same may be carried into effect, reference will now be made, by way of example, to the accompanying drawing in which:

Figure 1 is a schematic, side view of a cryogenic storage tank with a portion broken away;

Figure 2 is an enlarged cross-sectional view of one embodiment of superinsulation in accordance with the present invention;

Figure 3 is an enlarged cross-sectional view of a second embodiment of superinsulation in accordance with the present invention;

Figure 4 is a further enlarged view, in cross-section, showing a portion of the spherical wall of a third embodiment of superinsulation in accordance with the present invention; and

Figure 5 is an enlarged cross-sectional view of a fourth embodiment of superinsulation in accordance with the present invention.

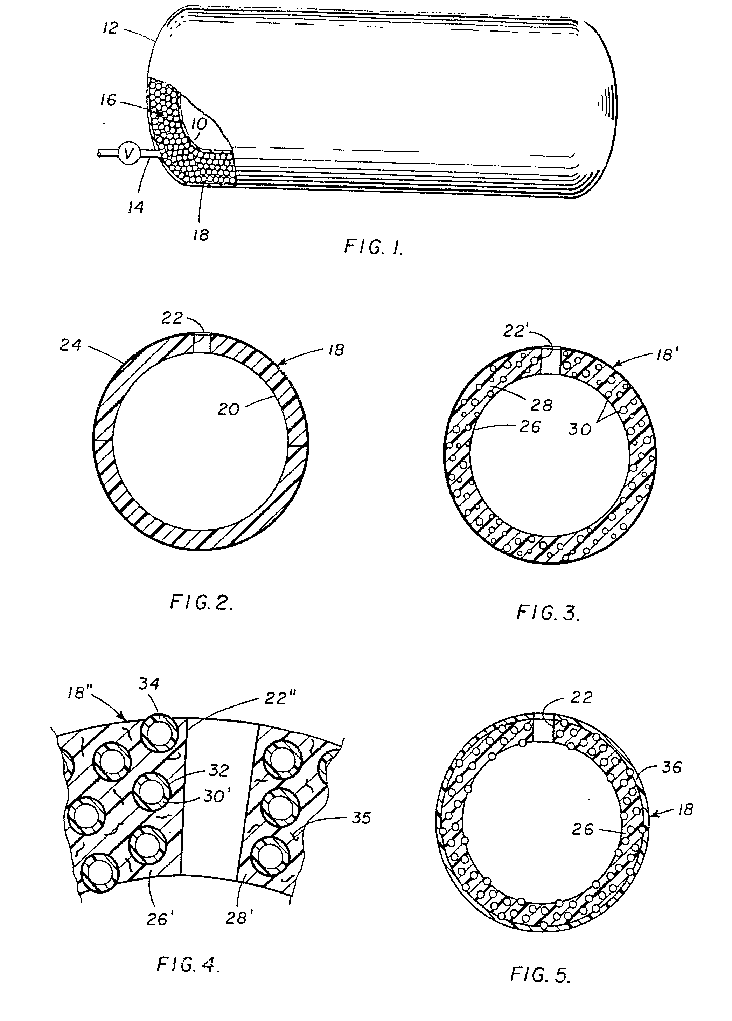

Referring to Figure 1, numeral 10 represents the inner vessel of a double-walled tank for storing a liquid cryogen such as liquid oxygen, nitrogen, hydrogen, or helium. Inner vessel 10 is constructed of stainless steel and is supported within an outer jacket 12 by a conventional suspension system (not shown).

The outer jacket 12 includes an evacuation pipe 14 through which the annular space between inner vessel 10 and outer jacket 12 may be evacuated to a partial pressure in the order of $1 \times 10^{-4}$ to $1 \times 10^{-2}$ Torr at ambient temperature.

Suitable adsorbents such as activated charcoal and palladium are arranged to maintain the low pressure in the annular space which is filled with pourable superinsulation 16 which is in the form of a plurality of hollow insulating spheres 18.

0012038

As shown in Figure 2, each of hollow insulating spheres 18 is formed with a homogeneous, spherical wall 20 which may be molded in two halves, or may be blown or vacuum molded by known techniques. The hollow insulating sphere 18 is provided with one evacuation hole 22 and is coated with a reflective layer 18 which forms a radiation barrier.

The spherical wall 20 may be composed of any suitable polymeric material which will retain sufficient structural. properties at cryogenic temperatures. For example, the spherical wall 20 may be composed of such polymeric materials as polyethylene, polypropylene or silicone, as well as materials sold under the trademarks Teflon, Nylon or Viton. Of course, the desired structural properties are dependent on a large number of factors including, for example, the overall diameter of the hollow insulating spheres which, in turn, is a function of the distance between inner vessel 10 and the outer jacket 12. In general, the overall diameter of the hollow insulating spheres 18 should be within the range of 0.125 to 1.5 inches for vessels and jackets which are spaced in the order of 1 to 18 inches. As will be further described, the overall diameter of the hollow insulating spheres 18 is also a function of the desired balance between conductivity, reflectivity and the physical installation requirements. Thus, as the diameter of the insulating spheres increases, a smaller number of spheres may be placed between the inner wall and the outer jacket, and the number of point contacts between spheres decreases. This tends to decrease the thermal conductivity of the mass of spheres forming the superinsulation, but the lesser number of spheres also reduces the number of radiation shields such that heat leak through radiation increases. In addition to these factors, the thickness of the spherical walls 20 also effects both the structural properties and the thermal characteristics. Therefore, depending upon the above-indicated factors, the wall thickness should preferably be within the range of 0.005 to 0.09 inches, and preferably in the order of 0.01 to 0.05 inches.

Where more than one evacuation hole is provided, the holes may be of small circular diameter such as, for example, of the order of 0.001 to 0.1 inches. However, when a single hole is used, this should be in the form of an arcuate slot or polygon so that the hole is not obstructed by the contact of an adjacent insulating sphere.

The reflective layer 18 may be in the form of an ultra-thin layer 24 of metal, such as aluminium, which may be vapor deposited on the external surface of the sphere. Such vapor deposition techniques are well-known and can produce aluminized layers having thicknesses in the range of 25 to 150$\overset{o}{A}$; the thinnest layers being in the order of a single molecular layer of aluminium. Alternatively, where the insulating sphere is composed of two halves which are molded together, the reflective layer may be vacuum deposited on the internal surface of the sphere halves. This results in a decrease in the thermal conductivity since the slightly conductive reflective layers are not in contact with the adjacent spheres, and the thickness of the reflective layer may be increased. In addition to the vapor deposition techniques described above, it will be apparent that other coating methods, such as electroplating, may be utilized to form the outer, or inner, reflective layers.

Referring to Figure 3, an insulating sphere of a non-homogeneous composition is illustrated in which the spherical walls 26 are composed of a mixture of a binder or resin 28 and a plurality of random-sized microspheres 30. The microspheres 30 are commercially available, and comprise hollow glass or plastic spheres having diameters in the order of 80 to 160 microns. The composite spheres may, for example, comprise uncoated glass or plastic microspheres in a polymeric binder 28 such as phenolic, epoxy or polyester resin. If uncoated plastic microspheres are utilized, the insulating sphere 18' should then be coated either internally or externally with a reflective layer such as the above- described coatings of aluminium or other reflective material. However, when glass microspheres are used, the reflectivity of the glass microspheres provides a radiation barrier which may be sufficient for some applications without an additional reflective coating.

Composite spheres, in their presently available form, have relatively high ratios of plastic resin to the microspheres such that the average thermal conductivity value is in the order of 0.4 BTU x in./(hr. x ft.$^2$ x $^o$F$^o$), which is within the general conductivity range of most plastics. However, the composite mixtures are preferably selected specifically to provide minimum conductivity in the composite sphere wall while maintaining structural integrity. For example, ratios above 50% (by volume), and as high as 400% of microspheres to binder are preferred from the standpoint of their thermal insulating properties. However, sufficient binder must be present to satisfy the particular structural requirements, and the structural requirements vary depending upon the amount of thermal expansion and contraction of the inner vessel and the distance between the vessel and the outer jacket. For example, in a horizontally elongated tank as shown in Figure 1, where the distance between the vessel wall 10 and the jacket 12 is in the order of 6 inches, the preferred diameter of the insulating spheres 18 is in the order of 1/8th to 1/2 inch, with the optimum diameter being in the order of 1/4 inch. For this diameter of insulating spheres, in this particular application, the preferred wall thickness of the composite spheres should be in the order of 0.005 to 0.05 inches, and preferably in the order of 0.01 inches. Depending upon the actual orientation of the insulating spheres within the 6 inch evacuated space, spheres of 1/4 inch diameter will result in up to 24 layers of insulating spheres between the vessel wall and the outer jacket. Since each insulating sphere contains two radiation layers perpendicular to the direction of heat leak, the above example provides more than 30 effective radiation barriers which is
sufficient to equal the total insualtion value provided by
conventional forms of superinsulation.

While the use of hollow spheres having a 1/8 inch
diameter would obviously double the number of radiation
layers, spheres this small should not be used in a 6 inch
insulation space since the increase in thermal conductivity,
due to the increased number of point contacts, has been
determined to more than offset the advantages of the additional radiation layers.   On the other hand, it has been
determined that spheres having a diameter in the order of 1
inch are preferred when the distance between the vessel wall
and the jacket is in the order of 12 inches.  Accordingly, it
has been discovered that the optimum diameter of the hollow
spheres should be in the order of 1/12 to 1/24 of the
distance between the vessel wall and the jacket.

Referring to Figure 4, a further embodiment of the
invention is illustrated in which walls 26' of the insulating
spheres 18'' are composed of a polymeric binder 28' and a
plurality of uniform sized microspheres 30'.   Instead of
providing the radiation shield in the form of a reflective
coating or lining on the insulating spheres, the reflective
shield is obtained by coating each of the glass or plastic
microspheres 30' with a reflective layer 32 before mixing the
microspheres in the binder.   Alternatively, chips 35 of
reflective material such as aluminium or silica flakes may be
added, or substituted for the coated microspheres 30'.   In
this manner, the layer of reflective material forming the
radiation shield becomes built into the wall of the insulating spheres and, except for those chips or microspheres which
may have portions extending beyond the edge of the resin,
such as microsphere 34, the reflective shield is not in
thermal contact with the reflective shield of the adjacent
insulating spheres.   It will also be noted that, even if two protruding microspheres of adjacent insulating spheres come into contact, the conductive path is blocked by the surrounding resin so that only a tiny fraction of each radiation shield is in contact. It will be apparent that random-sized microspheres may also be used in the Figure 4 embodiment, or that uniform sized microspheres may be used in the Figure 3 embodiment.

It should also be understood that Figures 3 and 4 are highly schematic and not to scale in order to illustrate the principles of the invention. As previously indicated, the diameters of presently available microspheres are in the order of 80 to 160 microns, and the desired thickness of the walls of the insulating spheres is in the order of 0.005 to 0.09 inches. Therefore, while Figure 4 shows only three microspheres across the distance of the wall of the insulating sphere 18'', in practice there will be in the order of 8 to 16 microspheres across the thickness of the wall depending upon the size of the microspheres, the thickness of the wall and the ratio of binder to microspheres.

Depending upon the type of plastic which is utilized in the Figure 2, 3 or 4 embodiments, it may be desirable to decrease the coefficient of friction between adjacent hollow spheres so as to improve the pouring properties and the ability of the hollow spheres to orient themselves in a dense matrix without bridging which may form small voids. Accordingly, the present invention encompasses the provision of low friction coatings which may be added to each of the three illustrated embodiments. For example, each of the insulating spheres 18, 18' or 18'', may have an additional, outer layer of a low friction material, such as Nylon or Teflon, which increases the flowability of the insulating spheres. As shown in Figure 5, an additional outer layer 36 of low friction material surrounds spherical walls 26 which may be of the homogeneous or non-homogeneous compositions previously described. In addition to the low coefficient of friction provided by the material of layer 36, it will be apparent that the outer coating 36 provides a much smoother surface than that presented by the Figure 3 and 4 embodiments in which some of the microspheres protrude from the outer surface of the resin material and thereby form a roughened surface. Therefore, the thickness of the low friction coating 36 should be sufficient to cover the protruding microspheres in the Figure 3 and 4 embodiments, but may be a microscopic powder coating in the Figure 2 embodiment.

From the foregoing description, it will be apparent that we have described an insulation system which may be easily installed and removed by simply pouring the insulation into or out of the insulation space. Due to the extreme lightness of the hollow insulating spheres, the total weight of the insulation system is substantially lighter than particulate-type systems described above. As a result, vessels 10 may carry larger amounts of the cryogenic liquid, for example, where the vessel 10 and jacket 12 comprise the container portion of a bulk liquid trailer or railroad car which are weight limited.

It will also be understood that the conductivity of the evacuated spheres described is significantly less than the normal conductivity of the polymeric material at atmospheric pressure since, under partial vacuum conditions, the gas molecules in the polymer material are out-gassed during the evacuation of the insulation space through evacuation line 14. Any further out-gassing which occurs after evacuation line is sealed, is adsorbed by the conventional adsorbents as previously described. Thus, the partial vacuum is retained within each of the hollow insulating spheres, and the insulation of the present invention does not compact such as to significantly reduce its long-term insulation value as in the case of prior insulation systems.

It should also be understood that other types of coatings may be employed on the spheres for special purposes.

For example, if the surfaces of the spheres are porous, or discontinuous, or otherwise difficult to coat with the reflective material, then a sealing coat may be applied to the surfaces of the spheres before applying the reflective coating. Numerous forms of sealing coatings are known, such as for example, liquid sealing resins or sealing materials such as a 15 weight percent solution of catalyzed epoxy compound in methylene chloride. Also, if excessive out gassing is found to occur from the particular material selected for the spheres when they are evacuated, then it is preferred to first bake the spheres to drive-off the excessive gases before applying the coating and/or the reflective layer.

While the present invention has been described in the context of cryogenic storage tanks, it will be apparent that the present insulation system may also be utilized in any low temperature application having evacuated double-walls such as, for example, in space chambers, food freezers and transfer lines.

## CLAIMS

1. Superinsulation comprising a plurality of hollow insulating spheres composed of polymeric material, characterized in that each of said hollow insulating spheres (a) has an overall diameter from 0.125 to 1.5 inches, (b) has at least one evacuation hole, and (c) is provided with reflective material to form a radiation shield.

2. Superinsulation according to Claim 1, characterized in that said reflective material comprises reflective particles incorporated in said polymeric material.

3. Superinsulation according to Claim 2, characterized in that said reflective material is selected from the group consisting of coated microspheres, uncoated glass microspheres, metal chips, silica flakes and mixtures thereof.

4. Superinsulation according to Claim 3, characterized in that said hollow insulating spheres are composed of a composite material comprising a polymeric resin and a plurality of microspheres, and in which the ratio of the volume of said microspheres to the volume of said polymeric resin is greater than 1:1.

5. Superinsulation according to Claim 1, 2, 3 or 4 characterized in that said reflective material comprises a coating having a thickness of from 25 to 150 $\mathring{A}$.

6. Superinsulation according to Claim 5, characterized in that said coating is applied to the inner wall of said hollow insulating spheres.

7. Superinsulation according to Claim 5 or 6, characterized in that the hollow insulating spheres are coated with a sealant prior to application of said coating.

8. Superinsulation according to any preceding Claim, characterized in that the outer wall of said hollow insulating spheres is provided with a coating of low friction material.

9.     Superinsulation according to any ...............
characterized in that the thickness of ... ... ... said
hollow insulating spheres is from 0.005 ... .. ... ...
the outer diameter of said hollow insulating spheres to from
0.125 to 1.5 inches.

10.    A superinsulation system comprising an evacuated
insulation space formed between a first wall and a second
wall spaced from said first wall, characterized in that said
insulation space contains superinsulation according to any
preceding claim.

11.    A superinsulation system according to Claim 10, char-
acterized in that said hollow insulating spheres have overall
diameters of from 1/12 to 1/24 the distance between said
first and second walls.

For the Applicants

Brian Lucas
CHARTERED PATENT AGENT
EUROPEAN PATENT ATTORNEY

0012038

1 / 1

FIG. 1.

FIG. 2.

FIG. 3.

FIG. 4.

FIG. 5.

## DOCUMENTS CONSIDERED TO BE RELEVANT

| Category | Citation of document with indication, where appropriate, of relevant passages | Relevant to claim |
|---|---|---|
| A | US - A - 3 410 443 (A. HOFMANN) <br> * Abstract; column 1, lines 27-37; column 1, line 66 - column 2, line 53; column 3, lines 4-27; column 3, line 48 - column 4, line 17; figures 1-3 * | 1,5 |
| A | US - A - 3 257 265 (L. ISENBERG) <br> * Column 1, lines 1-3; column 5, line 70 - column 6, line 8; figure 3 * | 1 |
| A | US - A - 3 607 169 (E.F. COXE) <br> * Abstract; column 1, lines 36-46; column 2, lines 47-70; column 3, line 14; column 3, lines 51-58; column 4, lines 6-22 * | 1 |
| A | CH - A - 435 892 (COMP. GENERALE D'ELECTRICITE) <br> * Column 1, lines 30-38; column 2, line 25 - column 3, line 11; figures 2-5 * | 1,5 |
| A | DE - A - 2 750 457 (GENERAL ELECTRIC) <br> * Page 3, paragraph 1; page 5, paragraphs 2,4; figure 2 * | 2,3 |
| A | FR - A - 2 340 289 (SULZER) <br> * Claims 1,3,4; figures 1,2 * | 1 |

**CLASSIFICATION OF THE APPLICATION (Int. Cl**

F 17 C 3/0
F 16 L 59/0
59/08

**TECHNICAL FIELDS SEARCHED (Int.Cl. )**

F 17 C 3/08
13/00
F 16 L 59/02
59/04
59/0
59/08
C 03 B 19/ 0

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family.
corresponding document

The present search report has been drawn up for all claims

| Place of search | Date of completion of the search | Examiner |
|---|---|---|
| The Hague | 25-02-1980 | SIEM |

EPO Form 1503.1   06.78